# EUROPÄISCHE PATENTSCHRIFT

(11) **EP 2 789 418 B1**
(45) Veröffentlichungstag und Bekanntmachung des Hinweises auf die Patenterteilung: **07.06.2017**
(21) Anmeldenummer: 14164025.0
(22) Anmeldetag: 09.04.2014
(51) Int. Cl.: B23B 51/00

(54) **Schneidenteil für einen Bohrer**
Cutting part for a drill
Partie de coupe pour un foret

(30) Priorität: 10.04.2013 DE 102013206318; 10.04.2013 AT 2782013
(43) Veröffentlichungstag der Anmeldung: 15.10.2014
(73) Patentinhaber: Alpen-Maykestag GmbH, 5412 Puch (AT)
(72) Erfinder: REITER, Johann, 4863 Seewalchen (AT); WENDLINGER, Karl, 5412 Puch/Hallein (AT); MIKL, Franz, 9170 Ferlach (AT)
(74) Vertreter: TBK

(56) Entgegenhaltungen:
- GB-A- 1 008 029
- JP-A- 2013 022 663
- US-A- 1 700 241
- US-A1- 2002 044 844
- US-A1- 2005 025 595
- US-A1- 2005 158 133

## Beschreibung

Die vorliegende Erfindung betrifft ein Schneidenteil für einen Bohrer zum Bohren in ein keramisches Bauteil, etwa ein Feinsteinzeugbauteil.

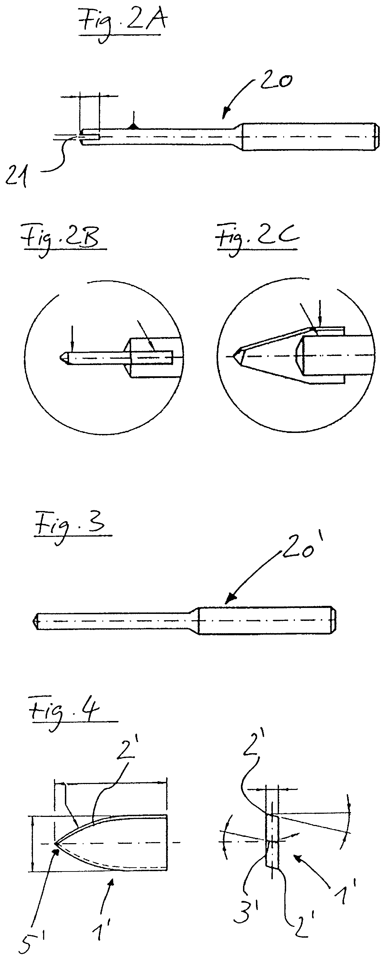

Aus dem Stand der Technik sind Bohrer bekannt, die sowohl für Glas als auch für Feinsteinzeug verwendet werden können. Üblicherweise bestehen solche Bohrer aus einem Schaft 20' (siehe Fig. 3), der an seinem vorderen Ende einen Einsetzschlitz 21' hat, in den ein plattenförmiges Schneidenteil 1' aus Hartmetall (siehe Fig. 4) eingesetzt und mit dem Schaft 20' verlötet ist. Das in Fig. 4 gezeigte Schneidenteil 1' hat einen flammenförmigen Hauptschneidenbereich, dessen Hauptschneiden 2' zu einer Spitze 5' hin aufeinander zu laufen und in einer Querschneide 3' enden. Die Querschneide 3' ergibt sich aus dem Verlauf der Freiflächen der Hauptschneiden 2' und ihr Mittelpunkt liegt auf der Längsachse des Scheidenteils 1'

Insbesondere die Bearbeitung von harten, keramischen Fliesen gewinnt zunehmend an Bedeutung. Zum Einen wird das Angebot keramischer Fliesen größer, zum Anderen werden die Fliesen härter (bis Mohs 9), sind relativ günstig zu haben und sie sind verschleißfest.

Die aus dem Stand der Technik bekannten, mit Hartmetallschneidenteilen bestückten Bohrer verschleißen schnell und es kann nur eine begrenzte Anzahl von Bohrlöchern, erfahrungsgemäß ein bis maximal zwei Bohrungen, mit einem Bohrer hergestellt werden. Eine bekannte Alternative stellen Diamantbohrwerkzeuge dar, welche jedoch nur gekühlt eingesetzt werden können und bei ungeübtem Einsatz relativ schnell zerstört werden.

Außerdem neigt die flammenförmige Schneide dazu, wegen ungleichmäßiger Zug- und Druckspannungen entlang der Flammenform auszubrechen, und die breite Querschneide verschleißt über die gesamte Plattenstärke relative schnell, da das Bohrmehl nicht optimal gefördert werden kann. Verschleiß entsteht dabei in erster Linie durch nicht gefördertes Bohrmehl, welches zu starker Hitzeentwicklung führt.

Beispielsweise ist ein Schneidenteil gemäß dem Oberbegriff von Anspruch 1 aus der US 2005/0025595 A1 bekannt. Weitere Schneidenteile bzw. Bohrerspitzen sind aus US 1,700241 A, GB 1,008,029 A und US 2002/0044844 A1 bekannt.

Es ist die Aufgabe der vorliegenden Erfindung, einen Bohrer zu schaffen, der beim Bohren insbesondere von Feinsteinzeug verschleißfest ist und daher das Bohren von deutlich mehr Bohrlöchern mit nur einem Bohrer erlaubt.

Erfindungsgemäß wird diese Aufgabe gelöst mit einem Schneidenteil zum Bohren in ein keramisches Bauteil mit den Merkmalen von Anspruch 1.

Das Schneidenteil ist plattenförmig, kann in einen Einsetzschlitz eines Schafts eingesetzt werden und weist zumindest einen Hauptschneidenbereich mit einer Hauptschneide und eine Spitze mit einer Querschneide auf, wobei das Schneidenteil eine Längsachse, eine Hauptachse und eine Querachse definiert, die zueinander senkrecht stehen und durch den geometrischen Schwerpunkt des Hauptschneidenbereichs verlaufen, wobei die Querschneide durch Verschnitt zweier Spitzenflächen ausgebildet ist und die Enden der Querschneide durch zwei Ausspitzungsflächen definiert sind, die zusammen mit den Spitzenflächen jeweils eine erste Spitzenhauptschneide und eine zweite Spitzenhauptscheide bilden, wobei der Mittelpunkt der Querschneide von der Längsachse um ein Exzentrizitätsmaß von mindestens 1% des Nenndurchmessers des Schneidenteils in Richtung der Querachse versetzt ist, sodass die erste Spitzenhauptschneide kürzer als die zweite Spitzenhauptschneide ist.

Ein Ende der Querschneide liegt auf der Längsachse. Mit anderen Worten sind die Enden der Querschneide entlang der Querachse um den Mittenversatz der Ausspitzungsflächen verschoben. Ein Ende der Querschneide liegt also um die Differenz der halben Querschneidenbreite zum Mittenversatz der Ausspitzungsflächen auf der Längsachse.

Bei diesem Schneidenteil ist der Mittelpunkt der Querschneide dann, wenn das Schneidenteil in den Einsetzschlitz des Schafts eingesetzt und damit verbunden ist, bei entsprechend genauer Ausrichtung der Längsachse des Schneidenteils an der Längsachse des Schafts von der Längsachse des Schafts um ein Exzentrizitätsmaß von mindestens 1% des Nenndurchmessers des Schneidenteils in Richtung der Querachse versetzt.

Im Betrieb des Bohrers entsteht durch die exzentrische Querschneide eine Art Rührbewegung an der Bohrerspitze. Die erste und kürzere Spitzenhauptschneide erzeugt dabei eine Taumelbewegung und sorgt somit für den Bohrvortrieb. Die zweite, längere Spitzenhauptschneide stützt ab und fördert das losgelöste Bohrmehl aus dem Bohrloch. Dies führt zu geringerer Überhitzung und ermöglicht längere Bohrerstandzeiten.

Durch Versuche ließ sich diese Funktionsweise bestätigen, da entsprechender Verschleiß an der kürzeren Spitzenhauptschneide der Bohrerspitze festzustellen war.

Vorzugsweise ist das Exzentrizitätsmaß größer als 1,5%, 2%, 3%, 4% oder 5% des Nenndurchmessers des Schneidenteils. Je größer das Exzentrizitätsmaß ist, desto kürzer wird die erste Spitzenhauptschneide und desto länger wird die zweite Spitzenhauptschneide, sodass die Taumelbewegung durch die erste Spitzenhauptschneide und das Abstützen und Abfördern durch die zweite Spitzenhauptschneide deutlicher erzeugt wird.

Vorzugsweise definieren die Spitzenflächen einen Spitzenwinkel, der größer als 90° ist. Weiter vorzugsweise beträgt der Spitzenwinkel 100°. Dieser Spitzenwinkel entspricht 116 bis 120° in der Frontansicht des geschliffenen Bohrers.

Vorzugsweise definieren die Ausspitzungsflächen einen Ausspitzungswinkel, der kleiner als 90° ist. Weiter vorzugsweise beträgt der Ausspitzungswinkel 60°.

Vorzugsweise definiert eine Kante, die durch den Verschnitt der die längere, zweite Spitzhauptschneide bildenden Ausspitzungsfläche mit einer Seitenfläche des Schneideteils definiert ist, mit einer die Hauptachse und die Querachse enthaltenden Ebene einen Winkel, der im Bereich von 5° bis 25° liegt. Weiter vorzugsweise beträgt dieser Winkel 15°. Durch diese Maßnahme wird ein Raum, der in Bewegungsrichtung des Schneidenteils vor der zweiten Spitzenhauptschneide liegt, durch eine größere Öffnung zwischen der Kante und der Bohrungswand weiter geöffnet. Daher kann anfallendes Bohrmehl besser abtransportiert werden.

Vorzugsweise weist der Hauptschneidenbereich zwei Zylinderschneiden an dem der Spitze entgegengesetzten Ende und zwei Kegelschneiden zwischen Spitze und Zylinderschneiden auf, wobei die Kegelschneiden und die Zylinderschneiden geradlinig verlaufen. Weiter vorzugsweise beträgt der Winkel zwischen den Kegelschneiden ca. 30°.

Im Wesentlichen stellte sich heraus, dass die kegelartige Form der Platte an den Kegelschneiden mit einem Winkel im Bereich von 30° bis 36° zwischen diesen optimal ist. Beispielsweise können für diesen Zweck Hartmetallplatten mit Flammenform umgeschliffen werden. Der erfindungsgemäße Spitzenanschliff durch die Spitzenflächen und die Ausspitzungsflächen mit exzentrischem Versatz der Querschneide sorgt für ein schnelles Eindringen beispielsweise in die Fliese und der sich vergrößernde Kegel reibt das Bohrloch mit geringem Kraftaufwand aus. Dadurch entstehen im Gegensatz zur Flammenform nur minimale Ausbrüche auf der Ausbohrseite und in weiterer Folge kann Fliesenbruch vermieden werden.

Vorzugsweise besteht das Schneidenteil aus Hartmetall.

Ferner hat ein erfindungsgemäßer Bohrer einen Schaft und ein Schneidenteil gemäß den obigen Merkmalen, das in einen Einsetzschlitz am vorderen Ende des Schafts eingesetzt und damit verbunden ist. Weiter vorzugsweise wird das Schneidenteil im Einsetzschlitz angelötet.

Vorzugsweise ist der Durchmesser eines dem Einsetzschlitz entgegengesetzten Spannabschnitts des Schafts größer als der Nenndurchmessers des Schneidenteils. Dies ermöglicht es, die durch die Exzentrizität der Querschneide erforderlichen, großen Drehmomente zu übertragen.

Vorzugsweise weist der dem Einsetzschlitz entgegengesetzte Spannabschnitt des Schafts eine oder mehrere Spannflächen auf. Dadurch können in vorteilhafter Weise noch größere Drehmomente übertragen werden.

Vorzugsweise ist der Spannabschnitt mit einer oder mehreren SDS-Nuten versehen und/oder sind die Spannflächen nach DIN 3126 ausgebildet.

Ein erfindungsgemäßes Verfahren zum Herstellen eines Schneideteils gemäß den obigen Merkmalen umfasst das Bereitstellen einer Rohplatte, die eine Längsachse, eine Hauptachse und eine Querachse definiert, die zueinander senkrecht stehen und durch den geometrischen Schwerpunkt der Rohplatte verlaufen, das Einbringen von zwei Hauptschneiden an in Richtung der Hauptachse einander entgegengesetzten Seiten der Rohplatte, wobei die Hauptschneiden einander in Richtung der Längsachse annähern, das Einbringen von zwei Spitzenflächen, durch deren Verschnitt eine Querschneide ausgebildet wird, und das Einbringen von zwei Ausspitzungsflächen, durch die die Enden der Querschneide definiert werden und die zusammen mit den Spitzenflächen jeweils eine erste Spitzenhauptschneide und eine zweite Spitzenhauptscheide bilden, wobei die zwei Ausspitzungsflächen so eingebracht werden, dass der Mittelpunkt der Querschneide von der Längsachse um ein Exzentrizitätsmaß von mindestens 1% des Nenndurchmessers des Schneidenteils in Richtung der Querachse versetzt ist, sodass die erste Spitzenhauptschneide kürzer als die zweite Spitzenhauptschneide ist. Die Ausspitzungsflächen werden ferner so eingebracht, dass ein Ende der Querschneide auf der Längsachse liegt. Mit anderen Worten sind die Enden der Querschneide entlang der Querachse um den Mittenversatz der Ausspitzungsflächen verschoben. Ein Ende der Querschneide liegt also um die Differenz der halben Querschneidenbreite zum Mittenversatz der Ausspitzungsflächen auf der Längsachse.

Mit diesem Verfahren lässt sich das Schneidenteil präzise fertigen. Vorteilhafterweise werden die Ausspitzungsflächen und die Spitzenflächen durch Schleifen mit der Stirnfläche einer Topfscheibe mit prozessabhängigem Anstellwinkel bewirkt. Dadurch können besonders ebene Ausspitzungsflächen und Spitzenflächen und somit präzise Schneidkanten erzeugt werden.

Vorzugsweise weist die Rohplatte eine gekrümmte Hauptschneide auf und das Verfahren umfasst den Schritt des Schleifens der gekrümmten Hauptschneide in eine geradlinige Hauptschneide.

Vorzugsweise erfolgen beim dem Verfahren alle Bearbeitungen ausgenommen das Erstellen der Ausspitzungsflächen zentrisch zur Werkzeuglängsachse, wobei die Ausspitzungsflächen um ein Exzentrizitätsmaß zur Längsachse versetzt werden. Der Mittenabstand der Ausspitzungsflächen wird entlang der Querachse angegeben und sollte mindestens 1 % des Nenndurchmessers des Schneidenteils betragen. Dadurch verschiebt sich der Mittelpunkt der Querschneide ebenfalls um den Mittenversatz der Ausspitzungsflächen.

Nun wird unter Bezugnahme auf die beiliegenden Figuren ein Ausführungsbeispiel der Erfindung erläutert. In den Figuren ist
Fig. 1A eine Seitenansicht eines Schneidenteils gemäß dem Ausführungsbeispiel in Querrichtung,
Fig. 1B eine Draufsicht des Schneidenteils aus Fig. 1,
Fig. 1C ein Schnitt entlang der Linie A-A aus Fig. 1,
Fig. 1D ein Schnitt entlang der Linie B-B aus Fig. 1
Fig. 1E eine Seitenansicht des Schneideteils aus Fig. 1 in Hauptrichtung,
Fig. 1F eine vergrößerte Draufsicht des Bereichs C aus Fig. 1E,
Fig. 2A einen Seitenansicht eine Schafts für die Montage des Schneidenteils aus Figuren 1A bis 1F,
Fig. 2B eine Seitenansicht in Hauptrichtung des am Schaft montierten Schneidenteils,
Fig. 2C eine Seitenansicht in Querrichtung des am Schaft montierten Schneidenteils,
Fig. 3 ein Schaft gemäß dem Stand der Technik,
Fig. 4 ein Schneidenteil gemäß dem Stand der Technik.

### Beste Art zum Ausführen der Erfindung

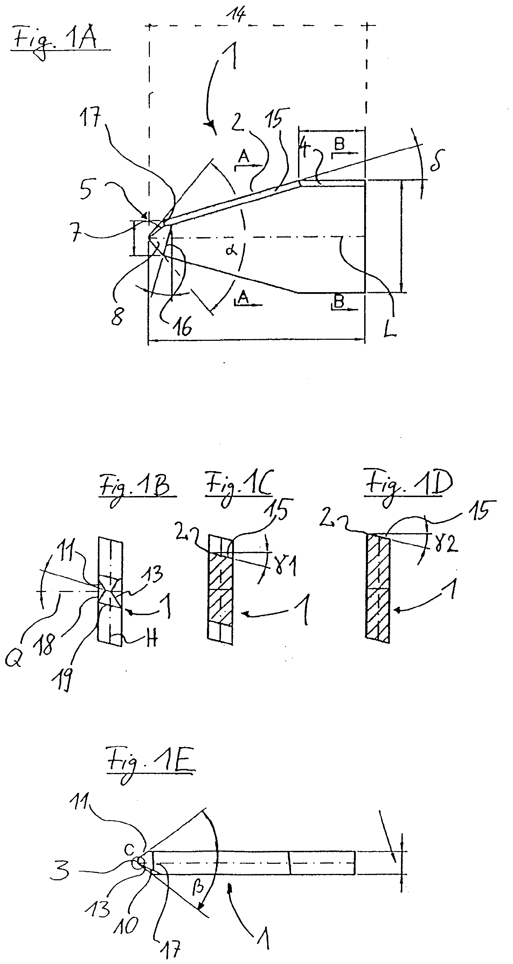

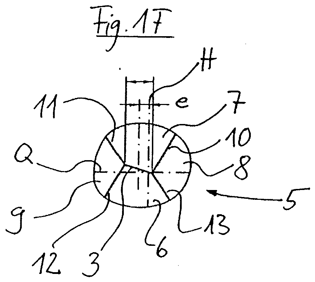

Fig. 1A zeigt eine Seitenansicht eines erfindungsgemäßen, plattenförmigen Schneidenteils 1 gesehen in Querrichtung, also in Richtung der in Fig. 1B gezeigten Querachse. Das Schneidenteil 1 hat einen Hauptschneidenabschnitt 14, in dem jeweils eine Kegelschneide 2 und eine Zylinderschneide 4 an in Hauptrichtung entgegengesetzten Seiten des plattenförmigen Schneidenteils 1 vorgesehen sind. An dem der Zylinderschneide 4 entgegengesetzten Ende der Kegelschneide 2 hat das Schneidenteil 1 eine Spitze 5 mit einem prismatischen Anschliff bestehend aus zwei Spitzenflächen 6, 7 und zwei Ausspitzungsflächen 8, 9, welche eine Querschneide 3, eine erste Spitzenhauptschneide 11 und eine zweite Spitzenhauptschneide 13 definieren (siehe Fig. 1F).

Die in Fig. 1A gezeigte Kegelschneide 2 verläuft geradlinig und bildet an der schmalen Seite des plattenförmigen Schneidenteils 1 eine Freifläche 15, die mit der Querachse Q (siehe Fig. 1B) einen Freiwinkel γ bildet, der in dem in Fig. 1C gezeigten Schnitt beispielsweise 15° (γ1) und in dem in Fig. 1D gezeigten Schnitt beispielsweise 14° (γ2) betragen kann. Die Freiflächen 15 sowie die Spitzenflächen 6, 7 können einen Kegelmantelhinterschliff haben (bombiert sein) oder sie können mehrfasig ausgeführt sein.

Zu Definitionszwecken wird angenommen, dass der Hauptschneidenabschnitt 14 des Schneidenteils 1 im Wesentlichen symmetrisch zur Längsachse L ausgebildet ist. Auf Grundlage diese Annahme sind die Hauptachse H und die Querachse Q definiert, die senkrecht zueinander stehen und beide die Längsachse L schneiden.

Auf Grundlage dieser Achsendefinition wird nun der geometrische Zusammenhang der Hauptschneiden 2, der Freiflächen 15, der Querschneide 3, der Spitzenflächen 6, 7 und der Ausspitzungsflächen 8, 9 beschrieben, wobei in diesem Ausführungsbeispiel diese Flächen in das in Fig. 4 gezeigte Schneidenteil 1' eingebracht werden.

Zunächst werden die gekrümmten Hauptschneiden 2' unter Einhaltung der in Figuren 1C und 1D gezeigten Winkel γ1 und γ2 gerade geschliffen, sodass sich jeweils die Kegelschneide 2 mit einem Winkel δ von jeweils 15° ergibt, sodass die beiden Kegelschneiden zusammen einen Winkel von ca. 30° einschließen.

Anschließend werden die Spitzenflächen 6, 7 so eingebracht, dass sie eine Spitzenwinkel von 100° einschließen und zwischen sich eine Querschneide 3 ausbilden, die in dem in Fig. 1F gezeigten Detail bezüglich der Querachse Q um etwa 20° schräg verläuft. Die Schrägstellung der Querschneide 3 kann mit dem Freiwinkel γ der Hauptschneide 2 zusammen hängen. Die Querschneide 3 kann jedoch auch parallel zur Querachse Q verlaufen.

Daraufhin werden die Ausspitzungsflächen 8, 9 eingebracht, die die Lage der Endpunkte der Querschneide 3 bestimmen. Außerdem entstehen durch den Verschnitt dieser Ausspitzungsflächen 8, 9 jeweils mit den Spitzenflächen 6, 7 die erste Spitzenhauptschneide 11 und die zweite Spitzenhauptschneide 13. Die Ausspitzungsflächen 8, 9 werden dabei so eingebracht, dass die Querschneide 3 an ihrem in Fig. 1F gezeigten rechten Ende stärker als an dem linken Ende verkürzt wird. In Fig. 1F liegt das rechte Ende fast auf der Längsachse L wohingegen das linke Ende deutlich von der Längsachse in Querrichtung versetzt ist. Dadurch ergibt sich, dass der Mittelpunkt der Querschneide 3 um ein Exzentrizitätsmaß e von der Längsachse L in Richtung der Querachse versetzt ist. Bei einem Bohrer mit einem Nenndurchmesser von 8mm beträgt das Exzentrizitätsmaß e mindestens 0,08 mm, also 1% des Nenndurchmessers. Versuche haben ergeben, dass Bohrer mit einem Exzentrizitätsmaß e bis ca. 0,3mm, also etwa 3,75% des Nenndurchmessers, gute Ergebnisse erzielt haben, also mehr als 20 Bohrlöcher je Bohrer möglich machten, bevor die Bohrwirkung infolge des Verschleißes deutlich abnahm.

Diesbezüglich ist ferner festzustellen, dass wegen der Exzentrizität der Querschneide 3 nach links in Fig. 1F die erste Spitzenhauptschneide 11 kürzer wird und die zweite Spitzenhauptschneide 13 länger wird. Ferner liegt ein größerer Anteil der Querschneide 3, wenn nicht sogar die gesamte Querschneide 3, in dem Bereich der Spitze, der sich in Gegenuhrzeigersinnrichtung vorwärts bewegt.

Dadurch erzeugt die kürzere erste Spitzenhauptschneide 11 eine Taumelbewegung und sorgt somit für den Bohrvortrieb. Die längere zweite Spitzenhauptschneide stützt hingegen ab und fördert das losgelöste Bohrmehl aus dem Bohrloch. Wegen des Abförderns des Bohrmehls tritt weniger Reibung und daher weniger Überhitzung auf, sodass verlängerte Standzeiten erreicht werden können. Diese Funktionsweise lässt sich auch am Verschleiß der Bohrerspitze bestätigen, da nach den Versuchen die kürzere "schneidende" Spitzenhauptschneide 11 stärker verschlissen als die längere "fördernde" Spitzenhauptschneide 13 war.

Ferner ist aus Fig. 1A ersichtlich, dass die Ausspitzungsfläche 8 derart ausgebildet ist, dass die Kante 16 am Verschnitt der Ausspitzungsfläche 8 mit der Seitenfläche des Schneideteils 1 im Hauptschneidenbereich 14 mit der Hauptachse H einen Winkel beispielsweise von 15° definiert. Dieser Winkel resultiert aus dem Freiwinkel der Ausspitzungsfläche 8 gegenüber der Spitzenhauptschneide 13 und führt dazu, dass die Kante 16 sich nicht mit der Kante 17 zwischen der Freifläche 15 und der Spitzenfläche 7 schneidet, sondern dass hier die Kante 16 bezüglich der Kante 17 von der Spitze 5 weg versetzt ist.

Beim Einschneiden in den keramischen Werkstoff wird durch die Querschneide 3 und die Spitzenhauptschneide 11, die sich um die Längsachse L drehen, ein kegelstumpfförmiges Loch erzeugt, wobei die Querschneide 3 und die Spitzenhauptschneide 11 als Erzeugende fungieren. Dies ist besonders gut aus Fig. 1E ersichtlich, die die Querschneide 3 und die erste Spitzenhauptschneide 11 in einer Ansicht zeigen, in der sie als Erzeugende wahrgenommen werden. Dabei beginnt die erste Spitzenhauptschneide 11 erst am radial weiter außerhalb liegenden Ende der Querschneide 3 und verkleinert erst dort die radiale Abmessung der Spitze 5. Demgegenüber beginnt die zweite Spitzenhauptschneide 13 sehr viel näher an der Längsachse L und verkleinert daher die radiale Abmessung der Spitze 5 mit Bezug auf die Längsrichtung des Schneidenteils 1 früher. Folglich ist an den Stellen im Bohrloch, an denen die zweite Spitzenhauptschneide 13 vorbeikommt, das Material bereits durch die erste Spitzenhauptschneide 11 abgeschabt, sodass die zweite Spitzenhauptschneide 13 im Wesentlichen keine Schabarbeit mehr leistet sondern das Bohrmehl nur noch transportiert.

Bei einer herkömmlich Spitze ohne Exzentrizität ist außerdem der Raum zwischen den Spitzenhauptschneiden nahezu geschlossen und lediglich durch einen kleinen Spalt zwischen der kegelstumpfförmigen Bohrlochwand und den den Kanten 18 und 19 in Fig. 1B entsprechenden Kanten offen. Daher kann das Bohrmehl schlecht abtransportiert werden.

Demgegenüber ist bei dem erfindungsgemäßen Schneidenteil der Raum im Bohrloch, der in Bewegungsrichtung vor der ersten Spitzenhauptschneide 11 und hinter der zweiten Spitzenhauptschneide 13 ausgebildet ist, durch den Spalt zwischen Bohrlochwand und der zweiten Spitzenhauptschneide 13 mit dem Raum in Bewegungsrichtung vor der zweiten Spitzenhauptschneide 13 verbunden. Daher kann das an der ersten Spitzenhauptschneide 11 anfallende Bohrmehl durch den Spalt zwischen der Bohrlochwand und der zweiten Spitzenhauptschneide 13 in dem Raum in Bewegungsrichtung vor der zweiten Spitzenhauptschneide 13 abtransportiert werden.

Da außerdem die Kante 16 geneigt ist, ist der Raum in Bewegungsrichtung vor der zweiten Spitzenhauptschneide 13 durch eine größere Öffnungen zwischen der Kante 16 und der Bohrlochwand weiter geöffnet, sodass das Bohrmehl wirkungsvoll in den Hauptschneidenbereich 14 abgegeben werden kann.

Bei diesem Ausführungsbeispiel wurde das in Fig. 4 gezeigte flammenförmige Schneidenteil 1' modifiziert. Es ist jedoch auch möglich eine Rohplatte zu verwenden, die bereits geradlinig verlaufende Hauptschneiden hat, oder geradlinige Hauptschneiden ohne Umweg über flammenförmig gekrümmte Hauptschneiden in eine Rohplatte einzubringen.

Das Schneidenteil 1 gemäß dem Ausführungsbeispiel wird durch folgende Fertigungsschritte hergestellt.

### 1) Fertigungsschritt: Bohrer-Rohling mit eingelöteter Hartmetallplatte

Es werden Fließpressteile oder Rohlinge aus Stangenmaterial verwendet. Diese werden auf einer Fertigungsstraße automatisch geschlitzt und das Schneidenteil wird eingesteckt. Anschließend werden die Bohrer in einem Vakuumofen vergütet und gelötet, sodass eine unlösbare Verbindung mit dem Schneidenteil entsteht.

### 2) Fertigungsschritt: Spitzeschleifen

Die Bohrer werden auf einer CNC-Werkzeug-Schleifmaschine mit einer Topfscheibe an der Planseite der Schleifscheibe mit Vorschubbewegung an der Kontur und einem definierten Anstellwinkel geschliffen.

Ein Schneidenteil (1) zum Bohren in ein keramisches Bauteil ist plattenförmig, kann in einen Einsetzschlitz (21) eines Schafts (20) eingesetzt werden und weist zumindest einen Hauptschneidenbereich (14) mit einer Hauptschneide (2) und eine Spitze (5) mit einer Querschneide (3) auf. Das Schneidenteil (1) definiert eine Längsachse (L), eine Hauptachse (H) und eine Querachse (Q), die zueinander senkrecht stehen und durch den geometrischen Schwerpunkt des Hauptschneidenbereichs (14) verlaufen. Die Querschneide (3) ist durch Verschnitt zweier Spitzenflächen (6, 7) ausgebildet und die Enden der Querschneide (3) sind durch zwei Ausspitzungsflächen (8, 9) definiert, die zusammen mit den Spitzenflächen (6, 7) jeweils eine erste Spitzenhauptschneide (11) und eine zweite Spitzenhauptscheide (13) bilden. Der Mittelpunkt der Querschneide (3) ist von der Längsachse (L) um ein Exzentrizitätsmaß (e) von mindestens 1% des Nenndurchmessers des Schneidenteils (1) in Richtung der Querachse (Q) versetzt, sodass die erste Spitzenhauptschneide (11) kürzer als die zweite Spitzenhauptschneide (13) ist. Ein Ende der Querschneide (3) liegt auf der Längsachse (L).

## Patentansprüche

1. Schneidenteil (1) zum Bohren in ein keramisches Bauteil, wobei das Schneidenteil (1) plattenförmig ist, in einen Einsetzschlitz (21) eines Schafts (20) eingesetzt werden kann und zumindest einen Hauptschneidenbereich (14) mit einer Hauptschneide (2) und eine Spitze (5) mit einer Querschneide (3) aufweist, wobei das Schneidenteil (1) eine Längsachse (L), eine Hauptachse (H) und eine Querachse (Q) definiert, die zueinander senkrecht stehen und durch den geometrischen Schwerpunkt des Hauptschneidenbereichs (14) verlaufen, wobei die Querschneide (3) durch Verschnitt zweier Spitzenflächen (6, 7) ausgebildet ist und die Enden der Querschneide (3) durch zwei Ausspitzungsflächen (8, 9) definiert sind, die zusammen mit den Spitzenflächen (6, 7) jeweils eine erste Spitzenhauptschneide (11) und eine zweite Spitzenhauptschneide (13) bilden, **dadurch gekennzeichnet, dass** der Mittelpunkt der Querschneide (3) von der Längsachse (L) um ein Exzentrizitätsmaß (e) von mindestens 1% des Nenndurchmessers des Schneidenteils (1) in Richtung der Querachse (Q) versetzt ist, sodass die erste Spitzenhauptschneide (11) kürzer als die zweite Spitzenhauptschneide (13) ist, wobei ein Ende der Querschneide (3) auf der Längsachse (L) liegt.

2. Schneidenteil (1) gemäß Anspruch 1, wobei das Exzentrizitätsmaß (e) größer als 1,5% des Nenndurchmessers des Schneidenteils (1) ist.

3. Schneidenteil (1) gemäß Anspruch 1, wobei das Exzentrizitätsmaß (e) größer als 2% des Nenndurchmessers des Schneidenteils (1) ist.

4. Schneidenteil (1) gemäß Anspruch 1, wobei das Exzentrizitätsmaß (e) größer als 3% des Nenndurchmessers des Schneidenteils (1) ist.

5. Schneidenteil (1) gemäß Anspruch 1, wobei das Exzentrizitätsmaß (e) größer als 4% des Nenndurchmessers des Schneidenteils (1) ist.

6. Schneidenteil (1) gemäß Anspruch 1, wobei das Exzentrizitätsmaß (e) größer als 5% des Nenndurchmessers des Schneidenteils (1) ist.

7. Schneidenteil (1) gemäß einem der Ansprüche 1 bis 6, wobei die Spitzenflächen (6, 7) einen Spitzenwinkel (α) definieren, der größer als 90° ist.

8. Schneidenteil (1) gemäß Anspruch 7, wobei der Spitzenwinkel (α) 100° beträgt.

9. Schneidenteil (1) gemäß einem der Ansprüche 1 bis 7, wobei die Ausspitzungsflächen (8, 9) einen Ausspitzungswinkel (β) definieren, der kleiner als 90° ist.

10. Schneidenteil (1) gemäß Anspruch 9, wobei der Ausspitzungswinkel (β) 60° beträgt.

11. Schneidenteil (1) gemäß einem der Ansprüche 1 bis 10, wobei eine Kante (16), die durch den Verschnitt der die längere, zweite Spitzhauptschneide (13) bildenden Ausspitzungsfläche (8) mit einer Seitenfläche des Schneidenteils (1) definiert ist, mit einer die Hauptachse (H) und die Querachse (Q) enthaltenden Ebene einen Winkel definiert, der im Bereich von 5° bis 25° liegt.

12. Schneidenteil (1) gemäß einem der Ansprüche 1 bis 11, wobei der Hauptschneidenbereich (14) zwei Zylinderschneiden (4) am der Spitze (5) entgegengesetzten Ende und zwei Kegelschneiden (2) zwischen Spitze (5) und Zylinderschneide (4) aufweist, wobei die Kegelschneiden (2) und die Zylinderschneiden (4) geradlinig verlaufen.

13. Bohrer (100) mit einem Schaft (20) und einem Schneidenteil (1) gemäß einem der Ansprüche 1 bis 12, der in einen Einsetzschlitz (21) am vorderen Ende des Schafts (20) eingesetzt und damit verbunden ist.

14. Bohrer (100) gemäß Anspruch 13, wobei der Durchmesser eines dem Einsetzschlitz (21) entgegengesetzten Spannabschnitts des Schafts (20) größer ist als der Nenndurchmessers des Schneidenteils (1).

15. Bohrer (100) gemäß Anspruch 13 oder 14, wobei ein dem Einsetzschlitz (21) entgegengesetzter Spannabschnitt des Schafts (20) eine oder mehrere Spannflächen aufweist.

16. Verfahren zum Herstellen eines Schneidenteils (1) gemäß einem der Ansprüche 1 bis 12 mit den folgenden Schritten:
Bereitstellen einer Rohplatte, die eine Längsachse (L), eine Hauptachse (H) und eine Querachse (Q) definiert, die zueinander senkrecht stehen und durch den geometrischen Schwerpunkt der Rohplatte verlaufen,
Einbringen von zwei Hauptschneiden (2) an in Richtung der Hauptachse (H) einander entgegengesetzten Seiten der Rohplatte, wobei die Hauptschneiden (2) einander in Richtung der Längsachse annähern,
Einbringen von zwei Spitzenflächen (6, 7), durch deren Verschnitt eine Querschneide (3) ausgebildet wird, und
Einbringen von zwei Ausspitzungsflächen (8, 9), durch die die Enden der Querschneide (3) definiert werden und die zusammen mit den Spitzenflächen (6, 7) jeweils eine erste Spitzenhauptschneide (11) und eine zweite Spitzenhauptschneide (13) bilden, **dadurch gekennzeichnet, dass**
die zwei Ausspitzungsflächen (8, 9) so eingebracht werden, dass der Mittelpunkt der Querschneide (3) von der Längsachse (L) um ein Exzentrizitätsmaß (e) von mindestens 1% des Nenndurchmessers des Schneidenteils (1) in Richtung der Querachse versetzt ist, sodass die erste Spitzenhauptschneide (11) kürzer als die zweite Spitzenhauptschneide (13) ist, und so, dass ein Ende der Querschneide (3) auf der Längsachse (L) liegt.

17. Verfahren gemäß Anspruch 16, wobei
das Einbringen der Spitzenflächen (6, 7) und der Ausspitzungsflächen (8, 9) durch Schleifen mit der Stirnfläche einer Topfscheibe bewirkt wird.

18. Verfahren gemäß Anspruch 16 oder 17, wobei die Rohplatte eine gekrümmte Hauptschneide aufweist, ferner mit dem Schritt des Schleifens der gekrümmten Hauptschneide in eine geradlinige Hauptschneide (2).

## Claims

1. Cutting part (1) for drilling into a ceramic component, wherein the cutting part (1) is in the form of a plate, can be inserted into an insertion slot (21) in a shank (20) and has at least one main cutting-edge region (14) with a main cutting edge (2), and a tip (5) with a chisel edge (3), wherein the cutting part (1) defines a longitudinal axis (L), a main axis (H) and a transverse axis (Q) which are perpendicular to one another and extend through the geometric centre of gravity of the main cutting-edge region (14), wherein the chisel edge (3) is formed by the intersection of two tip faces (6, 7) and the ends of the chisel edge (3) are defined by two point-thinning faces (8, 9) which, together with the tip faces (6, 7), each form a first tip main cutting edge (11) and a second tip main cutting edge (13), **characterized in that** the centre of the chisel edge (3) is offset in the direction of the transverse axis (Q) from the longitudinal axis (L) by a degree of eccentricity (e) of at least 1% of the nominal diameter of the cutting part (1), such that the first tip main cutting edge (11) is shorter than the second tip main cutting edge (13), wherein one end of the chisel edge (3) lies on the longitudinal axis (L).

2. Cutting part (1) according to Claim 1, wherein the degree of eccentricity (e) is greater than 1.5% of the nominal diameter of the cutting part (1).

3. Cutting part (1) according to Claim 1, wherein the degree of eccentricity (e) is greater than 2% of the nominal diameter of the cutting part (1).

4. Cutting part (1) according to Claim 1, wherein the degree of eccentricity (e) is greater than 3% of the nominal diameter of the cutting part (1).

5. Cutting part (1) according to Claim 1, wherein the degree of eccentricity (e) is greater than 4% of the nominal diameter of the cutting part (1).

6. Cutting part (1) according to Claim 1, wherein the degree of eccentricity (e) is greater than 5% of the nominal diameter of the cutting part (1).

7. Cutting part (1) according to one of Claims 1 to 6, wherein the tip faces (6, 7) define a tip angle (α) which is greater than 90°.

8. Cutting part (1) according to Claim 7, wherein the tip angle (α) is 100°.

9. Cutting part (1) according to one of Claims 1 to 7, wherein the tip-thinning faces (8, 9) define a tip-thinning angle (β) which is less than 90°.

10. Cutting part (1) according to Claim 9, wherein the tip-thinning angle (β) is 60°.

11. Cutting part (1) according to one of Claims 1 to 10, wherein an edge (16), which is defined by the intersection of the tip-thinning face (8), forming the longer, second tip main cutting edge (13), with a side face of the cutting part (1), defines an angle in the range of 5° to 25° with a plane containing the main axis (H) and the transverse axis (Q).

12. Cutting part (1) according to one of Claims 1 to 11, wherein the main cutting-edge region (14) has two cylindrical cutting edges (4) at the end away from the tip (5) and two conical cutting edges (2) between the tip (5) and cylindrical cutting edge (4), wherein the conical cutting edges (2) and the cylindrical cutting edges (4) extend in a rectilinear manner.

13. Drill bit (100) having a shank (20) and a cutting part (1) according to one of Claims 1 to 12, which has been inserted into an insertion slot (21) at the front end of the shank (20) and is connected thereto.

14. Drill bit (100) according to Claim 13, wherein the diameter of a clamping portion, opposite the insertion slot (21), of the shank (20) is greater than the nominal diameter of the cutting part (1).

15. Drill bit (100) according to Claim 13 or 14, wherein a clamping portion, opposite the insertion slot (21), of the shank (20) has one or more clamping faces.

16. Method for producing a cutting part (1) according to one of Claims 1 to 12, having the following steps of:
providing a raw plate which defines a longitudinal axis (L), a main axis (H) and a transverse axis (Q) which are perpendicular to one another and extend through the geometric centre of gravity of the raw plate,
introducing two main cutting edges (2) on mutually opposite sides, in the direction of the main axis (H), of the raw plate, wherein the main cutting edges (2) converge in the direction of the longitudinal axis,
introducing two tip faces (6, 7), the intersection of which forms a chisel edge (3), and
introducing two point-thinning faces (8, 9), which define the ends of the chisel edge (3) and which, together with the tip faces (6, 7), each form a first tip main cutting edge (11) and a second tip main cutting edge (13), **characterized in that**
the two point-thinning faces (8, 9) are introduced such that the centre of the chisel edge (3) is offset from the longitudinal axis (L) in the direction of the transverse axis by a degree of eccentricity (e) of at least 1% of the nominal diameter of the cutting part (1), such that the first tip main cutting edge (11) is shorter than the second tip main cutting edge (13), and such that one end of the chisel edge (3) lies on the longitudinal axis (L).

17. Method according to Claim 16, wherein
the tip faces (6, 7) and the point-thinning faces (8, 9) are introduced by being ground with the end face of a cup wheel.

18. Method according to Claim 16 or 17, wherein the raw plate has a curved main cutting edge, furthermore having the step of grinding the curved main cutting edge to form a rectilinear main cutting edge (2).

## Revendications

1. Partie de coupe (1) pour forer dans un composant en céramique, la partie de coupe (1) étant en forme de plaque, pouvant être insérée dans une fente d'insertion (21) d'une tige (20) et comportant au moins une zone de coupe principale (14) avec une lame principale (2) et une pointe (5) avec une lame transversale (3), la partie de coupe (1) définissant un axe longitudinal (L), un axe principal (H) et un axe transversal (Q) s'étendant perpendiculairement les uns par rapport aux autres et traversant le centre de gravité géométrique de la zone de coupe principale (14), la lame transversale (3) étant réalisée en coupant deux surfaces de pointe (6, 7) et les extrémités de la lame transversale (3) étant définies par deux surfaces d'affûtage (8, 9) formant respectivement, conjointement avec les surfaces de pointe (6, 7), une première lame principale de pointe (11) et une deuxième lame principale de pointe (13), **caractérisée en ce que** le point central de la lame transversale (3) est décalé par rapport à l'axe longitudinal (L) d'une mesure d'excentricité (e) d'au moins 1 % du diamètre nominal de la partie de coupe (1) en direction de l'axe transversal (Q), de sorte que la première lame principale de pointe (11) soit plus courte que la deuxième lame principale de pointe (13), une extrémité de la lame transversale (3) reposant sur l'axe longitudinal (L).

2. Partie de coupe (1) selon la revendication 1, la mesure d'excentricité (e) étant supérieure à 1,5 % du diamètre nominal de la partie de coupe (1).

3. Partie de coupe (1) selon la revendication 1, la mesure d'excentricité (e) étant supérieure à 2 % du diamètre nominal de la partie de coupe (1).

4. Partie de coupe (1) selon la revendication 1, la mesure d'excentricité (e) étant supérieure à 3 % du diamètre nominal de la partie de coupe (1).

5. Partie de coupe (1) selon la revendication 1, la mesure d'excentricité (e) étant supérieure à 4 % du diamètre nominal de la partie de coupe (1).

6. Partie de coupe (1) selon la revendication 1, la mesure d'excentricité (e) étant supérieure à 5 % du diamètre nominal de la partie de coupe (1).

7. Partie de coupe (1) selon l'une quelconque des revendications 1 à 6, les surfaces de pointe (6, 7) définissant un angle de pointe (α) supérieure à 90°.

8. Partie de coupe (1) selon la revendication 7, l'angle de pointe (α) étant de 100°.

9. Partie de coupe (1) selon l'une quelconque des revendications 1 à 7, les surfaces d'affûtage (8, 9) définissant un angle d'affûtage (β) inférieur à 90°.

10. Partie de coupe (1) selon la revendication 9, l'angle d'affûtage (β) étant de 60°.

11. Partie de coupe (1) selon l'une quelconque des revendications 1 à 10, une arête (16) définie par la coupe de la surface d'affûtage (8) plus longue formant la deuxième lame principale de pointe (13) avec une surface latérale de la partie de coupe (1) définit, avec un plan contenant l'axe principal (H) et l'axe transversal (Q), un angle situé dans la plage allant de 5° à 25°.

12. Partie de coupe (1) selon l'une quelconque des revendications 1 à 11, la zone de coupe principale (14) comportant deux lames cylindriques (4) au niveau de la pointe (5) de l'extrémité opposée et deux lames coniques (2) entre la pointe (5) et la lame cylindrique (4), les lames coniques (2) et les lames cylindriques (4) s'étendant en ligne droite.

13. Foret (100) avec une tige (20) et une partie de coupe (1) selon l'une quelconque des revendications 1 à 12, ledit foret étant inséré dans une fente d'insertion (21) au niveau de l'extrémité avant de la tige (20) et y étant relié.

14. Foret (100) selon la revendication 13, le diamètre d'une section de serrage de la tige (20) opposée à la fente d'insertion (21) étant supérieur au diamètre nominal de la partie de coupe (1).

15. Foret (100) selon la revendication 13 ou 14, une section de serrage de la tige (20) opposée à la fente d'insertion (21) comportant une ou plusieurs surfaces de serrage.

16. Procédé de fabrication d'une partie de coupe (1) selon l'une quelconque des revendications 1 à 12, avec les étapes suivantes :
mise à disposition d'une plaque brute définissant un axe longitudinal (L), un axe principal (H) et un axe transversal (Q) perpendiculaires les uns par rapport aux autres et s'étendant à travers le centre de gravité géométrique de la plaque brute ;
amenée de deux lames principales (2) au niveau des côtés opposés l'un par rapport à l'autre de la plaque brute en direction de l'axe principal (H), les lames principales (2) s'approchant l'une de l'autre en direction de l'axe longitudinal ;
amenée de deux surfaces de pointe (6, 7) dont la coupe permet de réaliser une lame transversale (3) ; et
amenée de deux surfaces d'affûtage (8, 9) permettant de définir les extrémités de la lame transversale (3) et formant conjointement avec les surfaces de pointe (6, 7) respectivement une première lame principale de pointe (11) et une deuxième lame principale de pointe (13) ;
**caractérisé en ce que** :
les deux surfaces d'affûtage (8, 9) sont amenées de telle sorte que le point central de la lame transversale (3) soit décalé par rapport à l'axe longitudinal (L) d'une certaine mesure d'excentricité (e) d'au moins 1 % du diamètre nominal de la partie de coupe (1) en direction de l'axe transversal, de sorte que la première lame principale de pointe (11) soit plus courte que la deuxième lame principale de pointe (13) et ainsi, qu'une extrémité de la lame transversale (3) se place sur l'axe longitudinal (L).

17. Procédé selon la revendication 16, l'amenée des surfaces de pointe (6, 7) et des surfaces d'affûtage (8, 9) étant obtenue par ponçage avec la surface avant d'une rondelle.

18. Procédé selon la revendication 16 ou 17, la plaque brute comportant une lame principale incurvée, en outre avec l'étape de ponçage de la lame principale incurvée pour en faire une lame principale (2) en ligne droite.
